# EUROPEAN PATENT APPLICATION

(11) **EP 4 276 066 A1**
(43) Date of publication of application: **15.11.2023**
(21) Application number: 21917756.5
(22) Date of filing: 27.12.2021
(51) Int. Cl.: C01B 32/40, B01D 53/62, B01D 53/82, C01B 32/50, F27D 17/00

(54) **GAS PRODUCTION DEVICE AND GAS PRODUCTION METHOD**

(30) Priority: 05.01.2021 JP 2021000608
(71) Applicant: Sekisui Chemical Co., Ltd., Osaka-shi, Osaka 530-8565 (JP)
(72) Inventor: TONO, Tsuyoshi, Tsukuba-shi, Ibaraki 300-4292 (JP); NAKAMA, Yuki, Tsukuba-shi, Ibaraki 300-4292 (JP); NAKAMURA, Masaki, Tsukuba-shi, Ibaraki 300-4292 (JP)
(74) Representative: Ter Meer Steinmeister & Partner
(86) International application number: PCT/JP2021/048697
(87) International publication number: WO 2022/149536

(57) **Abstract**

A gas production device 1 comprises a connection unit 2 for supplying an exhaust gas including carbon dioxide CO₂, a reducing gas supply unit 3 that supplies a reducing gas including H₂ that reduces a reducing agent 4R that has been brought into an oxidized state by contact with the carbon dioxide CO₂, the reducing agent including a metal oxide that generates CO by reducing the carbon dioxide CO₂, and a reaction unit 4 provided with a plurality of reactors 4a to 4d connected respectively to the connection unit 2 and the reducing gas supply unit 3, and with the educing agent 4R that is contained in each of the reactors 4a to 4d, in which the reaction unit 4 being capable of switching between the oxidizing gas and the reducing gas to be supplied to each of the reactors 4a to 4d. The plurality of reactors 4a to 4d include first reactors and second reactors to which the reducing gas is supplied when the oxidizing gas is supplied to the first reactors, and the number of the first reactors is two or more and/or the number of the second reactors is two or more.

## Description

### [Technical Field]

The present invention relates to a gas production device and a gas production method.

### [Background Art]

In recent years, the concentration of carbon dioxide (CO₂), which is a greenhouse gas, in the atmosphere has continued to rise. Rising concentration of carbon dioxide in the atmosphere contributes to global warming. Therefore, it is important to recover the carbon dioxide released into the atmosphere, and where the recovered carbon dioxide can be converted into a valuable substance and reused, a carbon recycling society can be realized.

Also, as a global measure, as stated also in the Kyoto Protocol of the United Nations Framework Convention on Climate Change, the decrease rate of the amount of carbon dioxide, which causes global warming, in developed countries is set for each country separately based on 1990 as a reference, and it is determined to achieve jointly the decrease target value within the commitment period.

In order to achieve the decrease target, exhaust gas containing carbon dioxide that is generated from ironworks, refineries and thermal power plants has also been targeted, and various technological improvements aimed at the decrease in the amount of carbon dioxide in these industries have been made. One example of such technology is CO₂ capture and storage (CCS). However, this technology has a physical limit of storage and is not a fundamental solution.

For example, Patent Literature 1 discloses a carbon dioxide reduction system equipped with a chemical looping type reaction device. This chemical looping type reaction device has two reactors filled with a metal oxide catalyst, the first reaction of reducing carbon dioxide into carbon monoxide being performed in one reactor and the second reaction of oxidizing hydrogen into water being performed in the other reactor.

### [Prior Art Documents]

### [Patent Documents]

[Patent Document 1] WO 2019/163968

### [Summary of Invention]

### [Problem to be Solved by the Invention]

However, there is still room for further improvement in industrially producing carbon monoxide (carbon valuable substance) from carbon dioxide more efficiently.

Accordingly, an object of the present invention is to provide a gas production device and a gas production method capable of continuously, stably and efficiently generating a carbon valuable substance by using an oxidizing gas including carbon dioxide and a reducing gas including a reducing substance.

### [Means of Solving the Problem]

Such an object is achieved by the present invention described hereinbelow.
(1) The gas production device of the present invention comprises an oxidizing gas supply unit that supplies an oxidizing gas including carbon dioxide;
   a reducing gas supply unit that supplies a reducing gas including a reducing substance that reduces a reducing agent that has been brought into an oxidized state by contact with the carbon dioxide, the reducing agent including a metal oxide that generates a carbon valuable substance by reducing the carbon dioxide; and
   a reaction unit provided with a plurality of reactors connected respectively to the oxidizing gas supply unit and the reducing gas supply unit, and the reducing agent contained in each of the reactors, the reaction unit being capable of switching between the oxidizing gas and the reducing gas to be supplied to each of the reactors, wherein
   the plurality of reactors include first reactors and second reactors to which the reducing gas is supplied when the oxidizing gas is supplied to the first reactors, and the number of the first reactors is two or more and/or the number of the second reactors is two or more.
(2) The gas production device of the present invention is preferably configured so that the number of the second reactors is two or more, and the reducing gas is passed through the two or more second reactors in succession.
(3) The gas production device of the present invention is preferably configured so that the number of the second reactors is two or more, and the reducing gas is passed through the two or more second reactors in parallel.
(4) The gas production device of the present invention is preferably configured so that the number of the first reactors is two or more, and the oxidizing gas is passed through the two or more first reactors in succession.
(5) The gas production device of the present invention is preferably configured so that the number of the first reactors is two or more, and the oxidizing gas is passed through the two or more first reactors in parallel.
(6) The gas production device of the present invention is preferably configured so that the number of the first reactors is two or more and the number of the second reactors is two or more, the oxidizing gas is passed through the two or more first reactors in succession, and the reducing gas is passed through the two or more second reactors in succession, and
   a first reducing agent and a second reducing agent different from the first reducing agent are preferably used as the reducing agent.
(7) In the gas production device of the present invention, it is preferable that the oxidizing gas be passed through in succession in order from the first reactor in which the first reducing agent is contained to the first reactor in which the second reducing agent is contained, and
   the reducing gas be passed through in succession in order from the second reactor in which the second reducing agent is contained to the second reactor in which the first reducing agent is contained.
(8) In the gas production device of the present invention, it is preferable that the direction in which the oxidizing gas is passed through the reactors and the direction in which the reducing gas is passed through the reactors be the same.
(9) In the gas production device of the present invention, it is preferable that the direction in which the oxidizing gas is passed through the reactors and the direction in which the reducing gas is passed through the reactors be opposite directions.
(10) The gas production device of the present invention preferably further includes, between the adjacent first reactors, a carbon monoxide removal unit that removes carbon monoxide from the oxidizing gas that has passed through the first reactor.
(11) The gas production device of the present invention preferably further includes, between the adjacent second reactors, a water removal unit that removes water from the reducing gas that has passed through the second reactor.
(12) In the gas production device of the present invention, it is preferable that the temperature of the reducing agent is set to a different temperature in at least one of the plurality of reactors.
(13) In the gas production device of the present invention, it is preferable that at least one of the plurality of reactors is different from others in volume.
(14) In the gas production device of the present invention, wherein in a case of defining the supply amount of the oxidizing gas to the first reactor as P [mL/min], and the supply amount of the reducing gas to the second reactor as Q [mL/min], a relationship in which P/Q is 0.7 to 1.1 is satisfied.
(15) In the gas production device of the present invention, it is preferable that the reducing agent include hydrogen.
(16) In the gas production device of the present invention, it is preferable that the oxidizing agent is an exhaust gas discharged from a furnace.
(17) The gas production method of the present invention comprises: preparing a plurality of reactors in which a reducing agent including a metal oxide that generates a carbon valuable substance by reduction of carbon dioxide is contained, an oxidizing gas including the carbon dioxide, and a reducing gas including a reducing substance that reduces the reducing agent that has been brought into an oxidized state by contact with the carbon dioxide, and
   supplying the oxidizing gas and the reducing gas to each of the reactors by switching between the oxidizing gas and the reducing gas to convert the carbon dioxide into the carbon valuable substance, and then reducing the oxidized reducing agent, wherein
   in a case of defining the reactor to which the oxidizing gas is supplied as first reactors, and the reactor to which the reducing gas is supplied as second reactors, the number of the first reactors is two or more and/or the number of the second reactors is two or more.
(18) In the gas production method of the present invention, it is preferable that the oxidizing gas is an exhaust gas discharged from a furnace.

### [Advantageous Effects of Invention]

According to the present invention, a carbon valuable substance can be generated continuously, stably, and efficiently by using an oxidizing gas including carbon dioxide and a reducing gas including a reducing substance.

### [Brief Description of Drawings]

[Fig. 1]

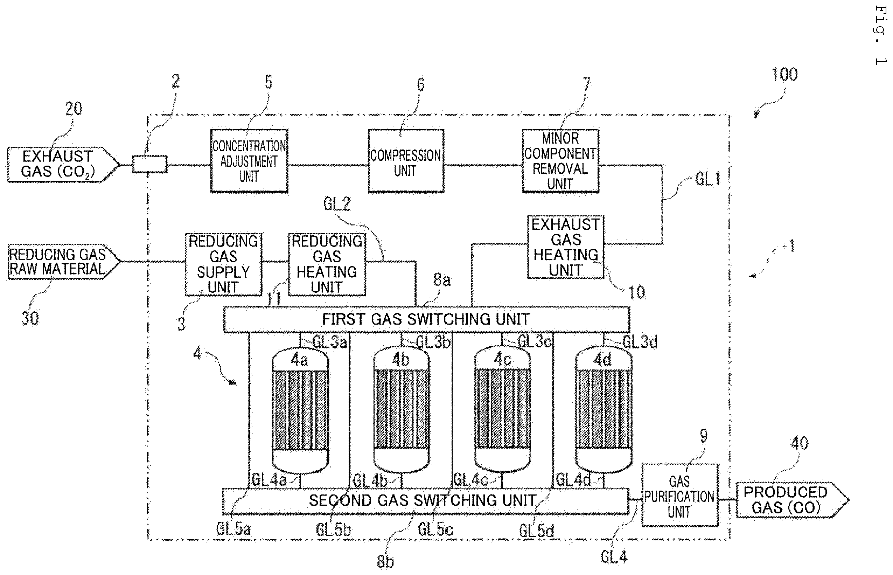

   Fig. 1 is a schematic diagram showing the first embodiment of the gas production system using the gas production device of the present invention.
[Fig. 2]

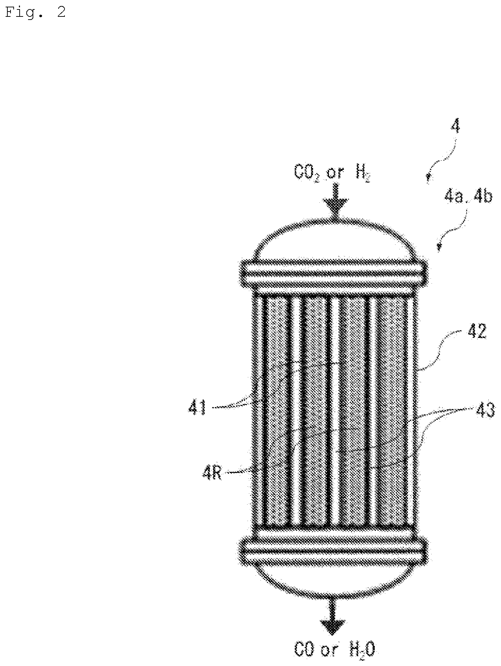

   Fig. 2 is a cross-sectional view schematically showing the configuration of a reactor used in the present invention.
[Fig. 3]

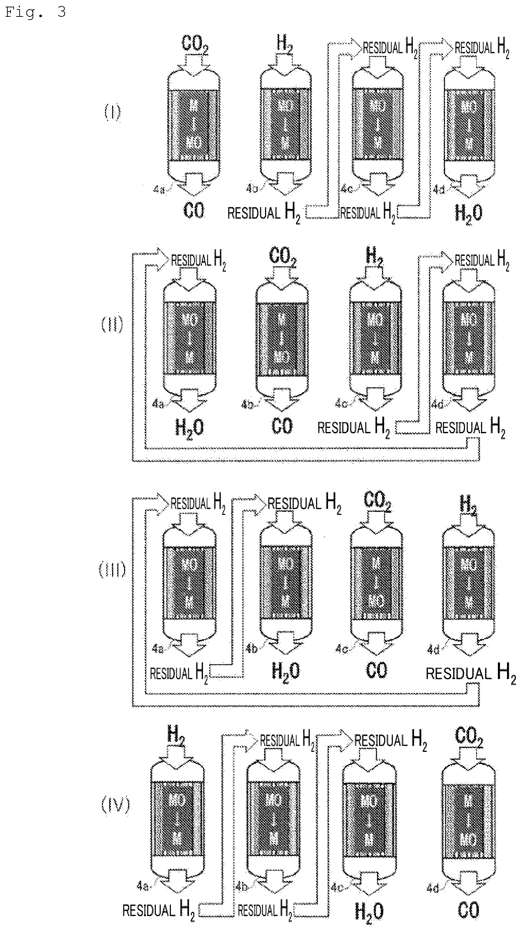

   Fig. 3 is a schematic diagram showing a method of switching the gases to be passed through the reactors in the first embodiment.
[Fig. 4]

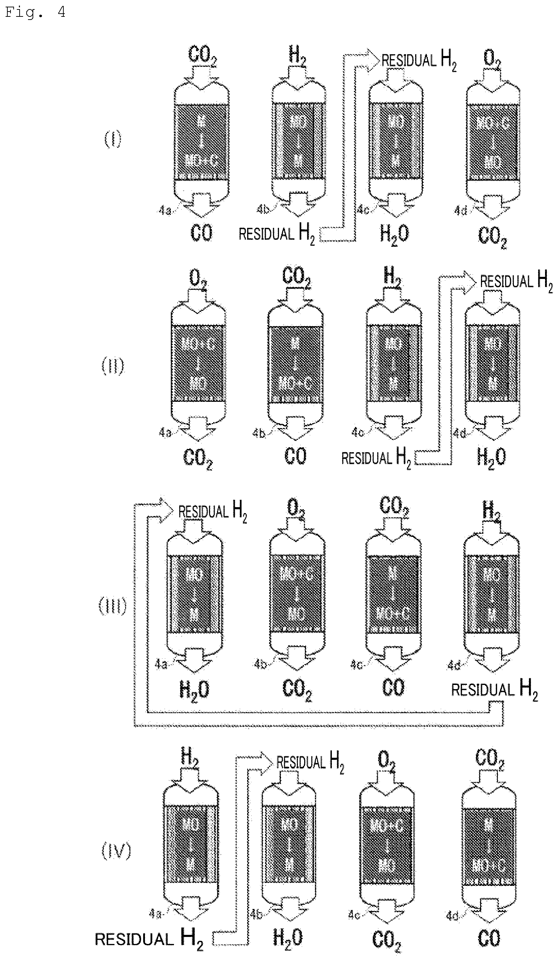

   Fig. 4 is a schematic diagram illustrating a method of regenerating a reducing agent in the first embodiment.
[Fig. 5]

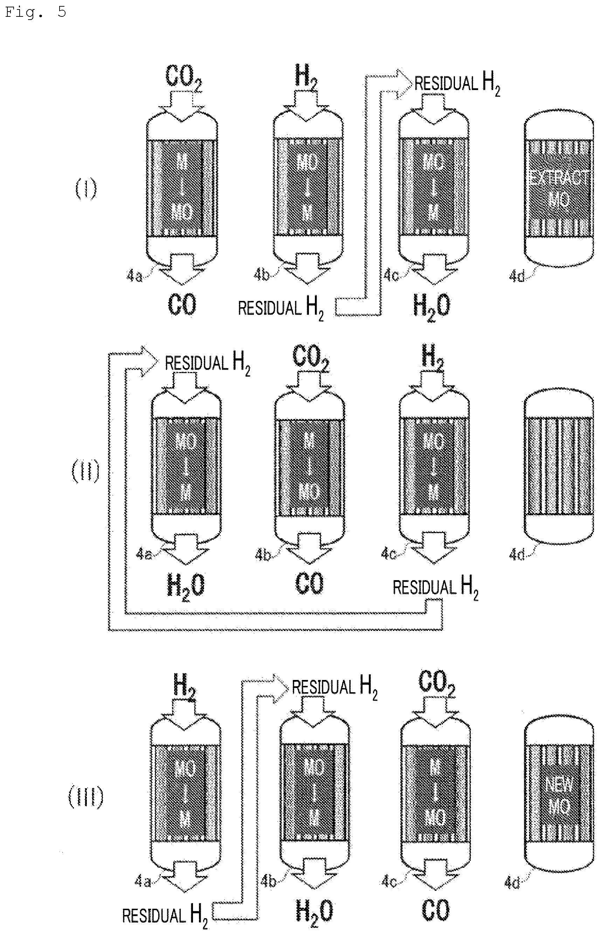

   Fig. 5 is a schematic diagram illustrating a method of replacing the reducing agent or overhauling the reactor in the first embodiment.
[Fig. 6]

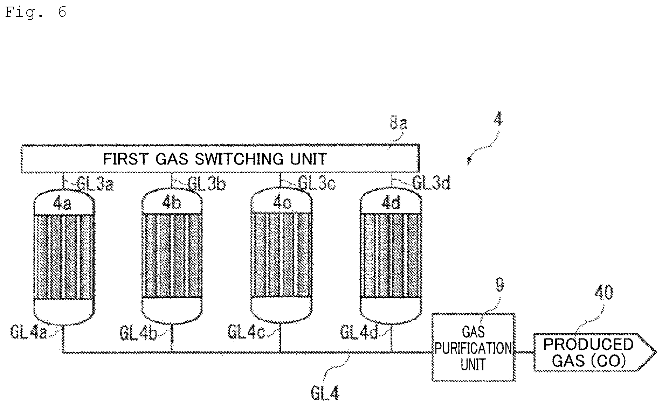

   Fig. 6 is a schematic diagram showing the configuration of the reaction unit of the second embodiment.
[Fig. 7]

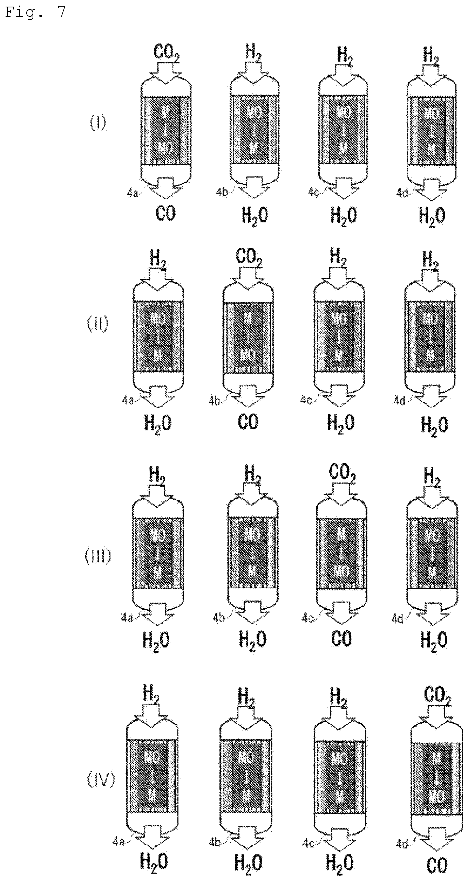

   Fig. 7 is a schematic diagram illustrating a method of switching the gases to be passed through the reactors in the second embodiment.
[Fig. 8]

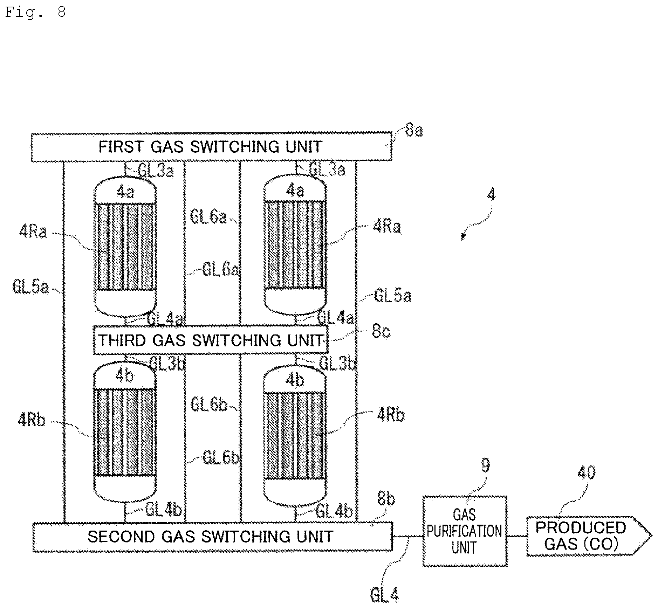

   Fig. 8 is a schematic diagram showing the configuration of the reaction unit of the third embodiment.
[Fig. 9]

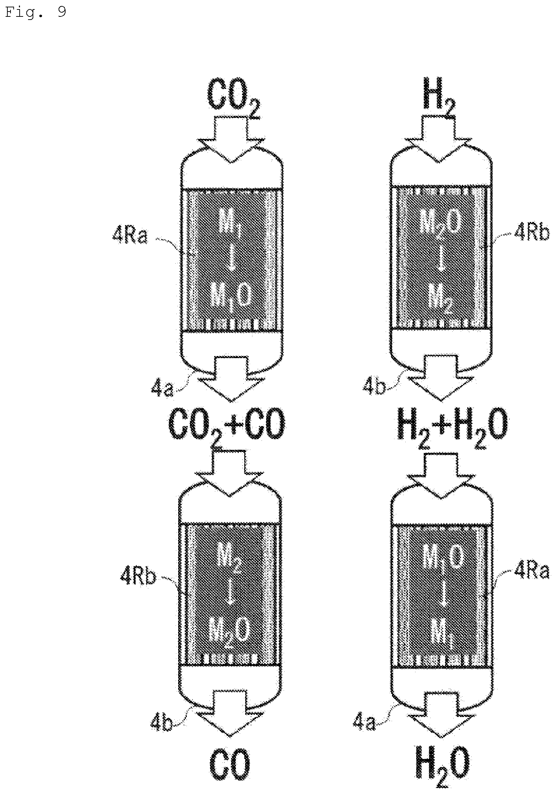

   Fig. 9 is a schematic diagram illustrating a method of switching the gases to be passed through the reactors in the third embodiment.
[Fig. 10]

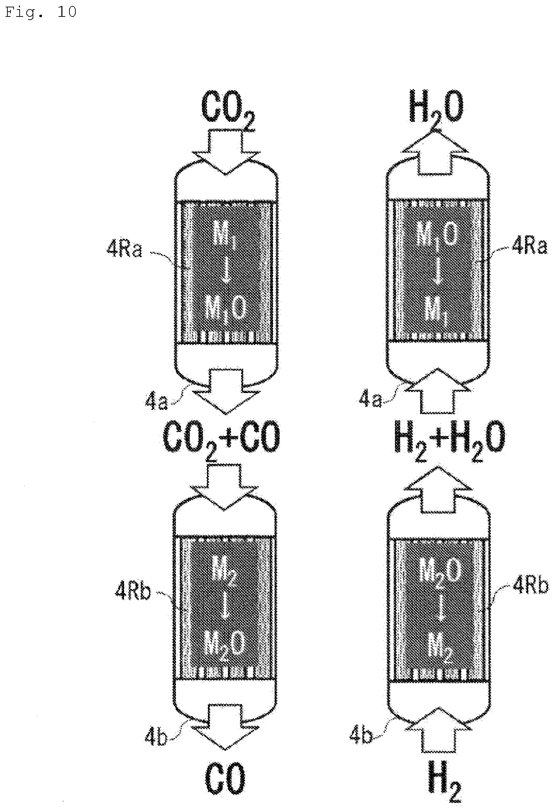

   Fig. 10 is a schematic diagram illustrating another method of switching the gases to be passed through the reactors in the third embodiment.

### [Description of Embodiments]

Hereinafter, the gas production device and gas production method of the present invention will be described in detail based on preferred embodiments illustrated by the accompanying drawings.

### <First Embodiment>

First, the first embodiment of the gas production system will be described.

Fig. 1 is a schematic diagram showing the first embodiment of the gas production system using the gas production device of the present invention, Fig. 2 is a cross-sectional view schematically showing the structure of a reactor used in the present invention, and Fig. 3 is a schematic diagram showing a method of switching the gases to be passed through the reactors in the first embodiment.

A gas production system 100 shown in Fig. 1 includes a furnace 20 that generates an exhaust gas (oxidizing gas) containing carbon dioxide, and a gas production device 1 that is connected to the furnace 20 through a connection unit 2.

In this description, the upstream side with respect to the gas flow direction is also simply referred to as the "upstream side", and the downstream side is simply referred to as the "downstream side".

The furnace 20 is not particularly limited and can be exemplified by a furnace associated with ironworks, refinery, or thermal power plants, preferably a combustion furnace, a blast furnace, a converter, and the like. In the furnace 20, the exhaust gas is generated (occurs) during combustion, melting, refining, and the like of the contents.

In the case of a combustion furnace (incinerator) in a garbage incineration plant, the contents (waste) include, for example, plastic waste, garbage, municipal waste (MSW), waste tires, biomass waste, household waste (bedding, paper), building materials, and the like. In addition, one type or two or more types of these wastes may be included.

Exhaust gas usually contains other gas components such as nitrogen, oxygen, carbon monoxide, water vapor, and methane in addition to carbon dioxide. The concentration of carbon dioxide contained in the exhaust gas is not particularly limited but considering the production cost of the produced gas (conversion efficiency into carbon monoxide), the concentration of carbon dioxide is preferably 1% by volume or more, more preferably 5% by volume or more.

The exhaust gas from a combustion furnace in a garbage incineration plant includes 5% by volume to 15% by volume of carbon dioxide, 60% by volume to 70% by volume of nitrogen, 5% by volume to 10% by volume of oxygen, and 15% by volume to 25% by volume of water vapor.

The exhaust gas from a blast furnace (blast furnace gas) is generated when pig iron is produced in the blast furnace, and contains 10% by volume to 15% by volume of carbon dioxide, 55% by volume to 60% by volume of nitrogen, 25% by volume to 30% by volume of carbon monoxide, and 1% by volume to 5% by volume of hydrogen.

In addition, the exhaust gas from the converter (converter gas) is generated when steel is produced in the converter, and contains 15% by volume to 20% by volume of carbon dioxide, 50% by volume to 60% by volume of carbon monoxide, 15% by volume to 25% by volume of nitrogen, and 1% by volume to 5% by volume of hydrogen.

The raw material gas is not limited to the exhaust gas, and a pure gas containing 100% by volume of carbon dioxide may be used.

However, where the exhaust gas is used as the oxidizing gas, the carbon dioxide that was conventionally emitted into the atmosphere can be effectively used, reducing the burden on the environment. Among these types of exhaust gas, from the viewpoint of carbon circulation, exhaust gas containing carbon dioxide that is generated in ironworks or refineries is preferable.

In addition, in the case of the blast furnace gas and converter gas, the unprocessed gas discharged from the furnace may be used as it is, or for example, a processed gas obtained by performing processing to remove carbon monoxide and the like may be used. The unprocessed blast furnace gas and converter gas have gas compositions as described above, and the processed gas has a gas composition close to that shown for the exhaust gas from the combustion furnace. In this description, all of the above gases (the gases before being supplied to the gas production device 1) are called exhaust gas.

### <Overall Configuration>

The gas production device 1 produces a produced gas (synthesis gas) including carbon monoxide by bringing the exhaust gas (oxidizing gas including carbon dioxide) discharged from the furnace 20 and supplied through the connection unit 2 into contact with a reducing agent including a metal oxide that reduces carbon dioxide contained in the exhaust gas.

In this description, carbon monoxide is representatively explained as an example of carbon valuable substance. Carbon valuable substances are not limited to carbon monoxide, and can be exemplified by methane, methanol, and the like, and these may be single substances or mixtures of two or more. The type of produced carbon valuable substance differs depending on the type of reducing agent, which will be described hereinbelow.

The gas production device 1 mainly includes the connection unit 2, a reducing gas supply unit 3, four reactors 4a to 4d, a gas line GL1 connecting the connection unit 2 and each of the reactors 4a to 4d, a gas line GL2 connecting the gas supply unit 3 and each of the reactors 4a to 4d, and a gas line GL4 connected to each of the reactors 4a to 4d.

In the present embodiment, the connection unit 2 constitutes an exhaust gas supply unit (oxidizing gas supply unit) that supplies the exhaust gas to the reactors 4a to 4d.

In addition, if necessary, a pump for transferring gas may be arranged at a predetermined location in the middle of the gas line GL1, the gas line GL2, and the gas line GL4. For example, when the pressure of the exhaust gas is adjusted to be relatively low in a compression unit 6, which will be described hereinbelow, the gas can be smoothly transferred within the gas production device 1 by arranging a pump.

The gas line GL1 is connected at one end thereof to the connection unit 2. Meanwhile, the other end of the gas line GL1 is connected to the inlet ports of the reactors 4a to 4d through a first gas switching unit 8a and four gas lines GL3a to GL3d, respectively, provided in a reaction unit 4.

With this configuration, the exhaust gas supplied from the furnace 20 through the connection unit 2 passes through the gas line GL1 and is supplied to each of the reactors 4a to 4d.

The first gas switching unit 8a can be configured to include, for example, a branched gas line and a flow path opening/closing mechanism such as a valve provided in the middle of the branched gas line.

As shown in Fig. 2, each of the reactors 4a to 4d is configured of a multi-tubular reaction device (fixed-bed reaction device) including a plurality of tubular bodies 41 each filled with a reducing agent 4R, and a housing 42 in which the plurality of tubular bodies 41 are contained. Such a multi-tubular reaction device makes it possible to ensure sufficient opportunities for contact of the reducing agent 4R with the exhaust gas and reducing gas. As a result, the production efficiency of the produced gas can be enhanced.

The reducing agent 4R of the present embodiment is preferably in the form of, for example, particles (granules), scales, pellets, and the like. With such a shape of the reducing agent 4R, the filling efficiency into the tubular body 41 can be improved, and the contact area with the gas supplied into the tubular body 41 can be further increased.

When the reducing agent 4R is particulate, the volume average particle diameter thereof is not particularly limited, but is preferably 1 mm to 50 mm, more preferably 3 mm to 30 mm. In this case, the contact area between the reducing agent 4R and the exhaust gas (carbon dioxide) can be further increased, and the conversion efficiency of carbon dioxide into carbon monoxide can be further improved. Similarly, the regeneration (reduction) of the reducing agent 4R by the reducing gas containing the reducing substance can be performed more efficiently.

The particulate reducing agent 4R is preferably a molded body produced by tumbling granulation because a higher degree of sphericity is achieved.

Also, the reducing agent 4R may be supported on a carrier. The constituent material of the carrier is not particularly limited as long as this material is unlikely to be modified by the exhaust gas (oxidizing gas), in response to reaction conditions, and the like, and examples thereof include carbon materials (graphite, graphene, and the like), carbides such as Mo₂C, oxides such as zeolite, montmorillonite, ZrO₂, TiO₂, V₂O₅, MgO, CeO₂, alumina (Al₂O₃), silica (SiO₂) and composite oxides containing these. Among these, zeolite, montmorillonite, SiO₂, ZrO₂, TiO₂, V₂O₅, MgO, alumina (Al₂O₃), silica (SiO₂) and composite oxides containing these are preferred. A carrier composed of such a material is preferable because of excellent ability to support the reducing agent 4R without adversely affecting the reaction of the reducing agent 4R. Here, the carrier does not participate in the reaction of the reducing agent 4R and merely supports (holds) the reducing agent 4R. Such a form can be exemplified by a configuration in which at least part of the carrier surface is coated with the reducing agent 4R.

The metal oxide (oxygen carrier) contained in the reducing agent 4R is not particularly limited as long as it can reduce carbon dioxide, but preferably contains at least one selected from metal elements belonging to Groups 3 to 12, more preferably contains at least one selected from metal elements belonging to Groups 4 to 12, even more preferably contains at least one of titanium, vanadium, iron, copper, zinc, nickel, manganese, chromium, cerium, and the like, and particularly preferably is a metal oxide or composite oxide including iron. These metal oxides are useful because they have a particularly good conversion efficiency of carbon dioxide into carbon monoxide.

As the metal oxide that converts carbon dioxide into carbon monoxide, for example, iron oxide, cerium oxide, and the like are suitable. As the metal oxide that converts carbon dioxide into methane, for example, zirconia, alumina, titania, silica, and the like that support or contain at least one of nickel and ruthenium are suitable. As the metal oxide that converts carbon dioxide into methanol, for example, zirconia, alumina, silica, and the like that support or contain at least one of copper and zinc are suitable.

In addition, in each of the reactors 4a to 4d, the tubular body (cylindrical molded body) 41 may be fabricated from the reducing agent 4R (metal oxide) itself. Furthermore, a block-shaped, lattice-shaped (for example, net-shaped or honeycomb-shaped), and the like molded body may be fabricated from the reducing agent 4R and arranged in the housing 42. In these cases, the reducing agent 4R as a filler may be omitted or used in combination.

Among these, a configuration is preferable in which a net-shaped body is fabricated from the reducing agent 4R and arranged in the housing 42. In the case of such a configuration, it is possible to ensure sufficient opportunities for contact of the reducing agent 4R with the exhaust gas and the reducing gas while preventing the passage resistance of the exhaust gas and the reducing gas in each of the reactors 4a to 4d from increasing.

The volumes of the four reactors 4a to 4d are set substantially equal to each other, and are set, as appropriate, according to the amount of exhaust gas to be processed (the size of the furnace 20 and the size of the gas production device 1). Also, the volume of at least one of the four reactors 4a to 4d may be different correspondingly to the types of exhaust gas and reducing gas, the performance of the reducing agent 4R, and the like.

A concentration adjustment unit 5, a compression unit 6, a minor component removal unit 7, and an exhaust gas heating unit (oxidizing gas heating unit) 10 are provided in this order from the connection unit 2 side in the middle of the gas line GL1.

The concentration adjustment unit 5 performs adjustment to increase the concentration of carbon dioxide contained in the exhaust gas (in other words, to concentrate carbon dioxide). The exhaust gas also contains unnecessary gas components such as oxygen. By increasing the concentration of carbon dioxide contained in the exhaust gas with the concentration adjustment unit 5, the concentration of unnecessary gas components contained in the exhaust gas can be relatively reduced. Therefore, it is possible to prevent or restrict the adverse effect of the unnecessary gas components on the conversion efficiency of carbon dioxide into carbon monoxide by the reducing agent 4R.

It is preferable that the concentration adjustment unit 5 be configured of an oxygen removal device that removes oxygen contained in the exhaust gas. As a result, the amount of oxygen brought into the gas production device 1 can be lowered (that is, the concentration of oxygen contained in the exhaust gas can be adjusted to be low). For this reason, the gas composition of the exhaust gas can be withdrawn from the explosion range, and ignition of the exhaust gas can be prevented. In the gas production device 1, the oxygen removal device consumes a large amount of electric energy, so it is effective to use electric power as renewable energy as described hereinbelow.

In this case, the concentration of oxygen contained in the exhaust gas is preferably adjusted to less than 1% by volume, more preferably less than 0.5% by volume, and even more preferably less than 0.1% by volume with respect to the entire exhaust gas. As a result, the ignition of the exhaust gas can be prevented more reliably.

The oxygen removal device that removes oxygen contained in the exhaust gas can be configured using one or two or more types of separators among separators of a low-temperature separation system (cryogenic system), separators of a pressure swing adsorption (PSA) system, separators of a membrane separation system, separators of a temperature swing adsorption (TSA) system, separators of a chemical absorption system, separators of a chemical adsorption system, and the like.

In the concentration adjustment unit 5, the concentration of carbon dioxide may be adjusted to a high level by adding carbon dioxide to the exhaust gas.

The compression unit 6 increases the pressure of the exhaust gas before the exhaust gas is supplied to the reactors 4a and 4b. This makes it possible to increase the amount of exhaust gas that can be processed at one time in the reactors 4a and 4b. Therefore, the conversion efficiency of carbon dioxide into carbon monoxide in the reactors 4a and 4b can be further improved.

The compression unit 6 can be configured of, for example, a centrifugal compressor, a turbo compressor such as an axial compressor, a displacement compressor such as a reciprocating compressor, a diaphragm compressor, a single-screw compressor, a twin-screw compressor, a scroll compressor, a rotary compressor, a rotary piston compressor, and a slide vane compressor, a Roots blower (two-leaf blower) capable of handling low pressure, a centrifugal blower, and the like.

Among these, the compression unit 6 is preferably configured of a centrifugal compressor from the viewpoint of easiness of increasing the scale of the gas production system 100, and preferably configured of a reciprocating compressor from the viewpoint of reducing the production cost of the gas production system 100.

The pressure of the exhaust gas after passing through the compression unit 6 is not particularly limited, but is preferably 0 MPaG to 1 MPaG, more preferably 0 MPaG to 0.5 MPaG, and even more preferably 0.01 MPaG to 0.5 MPaG. In this case, the conversion efficiency of carbon dioxide into carbon monoxide in the reactors 4a to 4d can be further improved without increasing the pressure resistance of the gas production device 1 more than necessary.

The minor component removal unit 7 removes minor components (microamounts of unnecessary gas components and the like) contained in the exhaust gas.

The minor component removal unit 7 can be configured of, for example, at least one processing unit selected from a gas-liquid separator, a protector (guard reactor) and a scrubber (absorption tower).

When using a plurality of processing units, the arrangement order thereof is arbitrary, but when using a gas-liquid separator and a protector in combination, it is preferable to arrange the gas-liquid separator upstream of the protector. In this case, it is possible to further improve the efficiency of removing minor components from the exhaust gas and extend the usage period (life) of the protector.

For example, the gas-liquid separator separates condensed water (liquid) generated when the exhaust gas is compressed in the compression unit 6 from the exhaust gas. In this case, unnecessary gas components and the like remaining in the exhaust gas are also dissolved and removed in the condensed water.

The gas-liquid separator can be configured of, for example, a simple container, a swirling flow separator, a centrifugal separator, a surface tension separator, and the like. Among these, the gas-liquid separator is preferably configured of a simple container because of simple configuration, low cost, and the like. In this case, a filter may be arranged at the gas-liquid interface in the container to allow passage of gas but inhibit passage of liquid.

Also, in this case, a liquid line may be connected to the bottom of the container and a valve may be provided in the middle of the liquid line. With such a configuration, the condensed water stored in the container can be discharged to the outside of the gas production device 1 through the liquid line by opening the valve.

The liquid line may be connected to a tank 30, which will be described hereinbelow, so that the discharged condensed water could be reused.

For example, a configuration can be used in which the exhaust gas from which the condensed water has been removed by the gas-liquid separator is supplied to the protector.

Such a protector preferably includes a substance capable of capturing a component (inactivating component) that is a minor component contained in the exhaust gas and that reduces the activity of the reducing agent 4R upon contact with the reducing agent 4R.

With such a configuration, when the exhaust gas passes through the protector, the substance in the protector reacts with (captures) the inactivating component, thereby inhibiting or restricting the inactivating component from reaching the reducing agent 4R in the reactors 4a to 4d and protecting the reducing agent (that is, preventing a decline in activity). Therefore, it is possible to prevent or restrict an extreme decrease in the conversion efficiency of carbon dioxide into carbon monoxide by the reducing agent 4R due to the adverse effects of the inactivating component.

A substance having a composition that is contained in the reducing agent 4R and that decreases the activity of the reducing agent 4R upon contact with an inactivating component, specifically, a metal oxide that is the same as or similar to the metal oxide contained in the reducing agent 4R, can be used for the aforementioned substance. Here, similar metal oxides refer to metal oxides that contain the same metal element but have different compositions, or metal oxides containing metals that differ in type but belong to the same group in the periodic table of the elements.

The inactivating component is preferably at least one selected from sulfur, mercury, sulfur compounds, halogen compounds, and organosilicone, organophosphorus and organometallic compounds, more preferably at least one selected from sulfur and sulfur compounds. By removing such inactivating components in advance, it is possible to effectively prevent the activity of the reducing agent 4R from abruptly decreasing.

The above substance may be any substance with activity lowered by the same component as the inactivating component of the reducing agent 4R, and a metal oxide such as iron oxide and zinc oxide is preferred because of excellent capacity to capture the inactivating component.

The protector can have a configuration in which a mesh material is arranged in a housing, and particles of the substance are placed on the mesh material, a configuration in which a honeycomb-shaped filter member or a cylindrical or particle-shaped molded body configured of the substance is arranged in a housing, and the like.

In particular, when a protector is arranged between the compression unit 6 (gas-liquid separator) and the exhaust gas heating unit 10, the removal efficiency of the inactivating component can be improved while preventing the above substance from deteriorating due to heat.

The exhaust gas heating unit 10 heats the exhaust gas before the exhaust gas is supplied to the reactors 4a to 4d. By preheating the exhaust gas in the exhaust gas heating unit 10 before the reaction (before the reduction), the conversion (reduction) reaction of carbon dioxide into carbon monoxide by the reducing agent 4R can be further promoted in the reactors 4a to 4d.

The exhaust gas heating unit 10 can be configured of, for example, an electric heater and a heat exchanger (economizer).

The heat exchanger is configured by bending a portion of piping constituting the gas line GL4 (see hereinbelow) that discharges the gas (mixed gas) that has passed through the reactors 4a to 4d, and bringing this piping closer to the piping constituting the gas line GL1. With such a configuration, the heat of the high-temperature gas (mixed gas) that has passed through the reactors 4a to 4d is used to heat, by heat exchange, the exhaust gas before the exhaust gas is supplied to the reactors 4a to 4d, so that effective use of heat can be achieved.

Such a heat exchanger can be configured of, for example, a jacket heat exchanger, an immersion coil heat exchanger, a double-tube heat exchangers, a shell and tube heat exchanger, a plate heat exchanger, a spiral heat exchanger, and the like.

Also, in the exhaust gas heating unit 10, either one of the electric heater and the heat exchanger may be omitted.

In the exhaust gas heating unit 10, a combustion furnace and the like can also be used instead of the electric heater. However, where an electric heater is used, electric power (electrical energy) as renewable energy can be used as the power source, so the load on the environment can be reduced.

As renewable energy, electric energy using at least one selected from solar power, wind power, hydraulic power, wave power, tidal power, biomass power, geothermal power, solar heat and geothermal heat can be used.

Further, on the upstream side of the exhaust gas heating unit 10 (for example, between the gas-liquid separator and the protector in the middle of the minor component removal unit 7), an exhaust gas line may be branched from the gas line GL1, and a vent portion provided outside the gas production device 1 may be connected to the end portion of the exhaust gas line.

In this case, a valve is preferably provided in the middle of the exhaust gas line.

Where the pressure in the gas production device 1 (gas line GL1) rises more than necessary, the valve is opened thereby making it possible to discharge (release) part of the exhaust gas from the vent through the exhaust gas line. As a result, it is possible to prevent the gas production device 1 from being damaged due to an increase in pressure.

The gas line GL2 is connected at one end thereof to the reducing gas supply unit 3. Meanwhile, the gas line GL2 is connected to the inlet ports of the reactors 4a to 4d through the first gas switching unit 8a and the four gas lines GL3a to GL3d, respectively, that are provided in the reaction unit 4.

The reducing gas supply unit 3 supplies the reducing gas including a reducing substance that reduces the reducing agent 4R oxidized by contact with carbon dioxide. The reducing gas supply unit 3 of the present embodiment is configured of a hydrogen generator that generates hydrogen by electrolysis of water, and a tank (reducing gas raw material storage unit) 30 that is outside the gas production device 1 and stores water is connected to the hydrogen generator. With such a configuration, the reducing gas including hydrogen (reducing substance) that is supplied from the hydrogen generator (reducing gas supply unit 3) passes through the gas line GL2 and is supplied to each of the reactors 4a to 4d.

With the hydrogen generator, a large amount of hydrogen can be generated relatively inexpensively and easily. Moreover, there is also an advantage that the condensed water generated in the gas production device 1 can be reused. In the gas production device 1, the hydrogen generator consumes a large amount of electric energy, so it is effective to use electric power as renewable energy as described above.

A device that generates by-product hydrogen can also be used as the hydrogen generator. In this case, a reducing gas including by-product hydrogen is supplied to each of the reactors 4a to 4d. As a device for generating by-product hydrogen, for example, a device for electrolyzing an aqueous solution of sodium chloride, a device for steam reforming petroleum, a device for producing ammonia, and the like can be mentioned.

Further, the gas line GL2 may be connected through a connection unit to a coke oven located outside the gas production device 1, and the exhaust gas from the coke oven may be used as the reducing gas. In this case, the connection unit constitutes the reducing gas supply unit. This is because the exhaust gas from the coke oven is mainly composed of hydrogen and methane and contains 50% by volume to 60% by volume of hydrogen.

A reducing gas heating unit 11 is provided in the middle of the gas line GL2. This reducing gas heating unit 11 heats the reducing gas before the reducing gas is supplied to the reactors 4a to 4d. By preheating the reducing gas in the reducing gas heating unit 11 before the reaction (before the oxidation), the reduction (regeneration) reaction of the reducing agent 4R by the reducing gas in the reactors 4a to 4d can be further promoted.

The reducing gas heating unit 11 can be configured in the same manner as the exhaust gas heating unit 10. The reducing gas heating unit 11 is preferably configured of only an electric heater, only a heat exchanger, or a combination of an electric heater and a heat exchanger, more preferably of only a heat exchanger or a combination of an electric heater and a heat exchanger.

Where the reducing gas heating unit 11 is equipped with a heat exchanger, since the heat of the high-temperature gas (for example, mixed gas) that has passed through the reactors 4a to 4d is used to heat, by heat exchange, the reducing gas before the reducing gas is supplied to the reactors 4a to 4d, effective use of heat can be achieved.

With the configuration as described above, by switching the gas lines (flow paths) in the first gas switching unit 8a, for example, the exhaust gas can be supplied through the gas line GL3a to the reactor 4a in which the unoxidized reducing agent 4R is contained, and the reducing gas can be supplied through the gas line GL3b to the reactor 4b in which the oxidized reducing agent 4R is contained. At this time, the reaction of the following formula 1 advances in the reactor 4a, and the reaction of the following formula 2 advances in the reactor 4b.

In the following formulas 1 and 2, the case where the metal oxide contained in the reducing agent 4R is iron oxide (FeOₓ₋₁) is shown by way of example.

Formula 1: CO₂ + FeOₓ₋₁ → CO + FeOₓ

Formula 2: H₂ + FeOₓ → H₂O + FeOₓ₋₁

After that, by switching the gas lines in the opposite direction to the above in the first gas switching unit 8a, the reaction of formula 2 above can be advanced in the reactor 4a, and the reaction of formula 1 above can be advanced in the reactor 4b.

The reactions shown in formulas 1 and 2 above are both endothermic reactions. Therefore, the gas production device 1 preferably further includes a reducing agent heating unit (not shown in Fig. 1) that heats the reducing agent 4R when the exhaust gas or the reducing gas is brought into contact with the reducing agent 4R (that is, when the exhaust gas or the reducing gas reacts with the reducing agent 4R).

By providing such a reducing agent heating unit, the temperature in the reaction between the exhaust gas or the reducing gas and the reducing agent 4R is maintained at a high level, a decrease in the conversion efficiency of carbon dioxide into carbon monoxide can be suitably prevented or restricted and the regeneration of the reducing agent 4R by the reducing gas can be further promoted.

However, depending on the type of reducing agent 4R, the reactions shown in the above formulas 1 and 2 may be exothermic reactions. In this case, the gas production device 1 preferably has a reducing agent cooling unit that cools the reducing agent 4R, instead of the reducing agent heating unit. By providing such a reducing agent cooling unit, deterioration of the reducing agent 4R during the reaction between the exhaust gas or the reducing gas and the reducing agent 4R can be suitably inhibited, a decrease in the conversion efficiency of carbon dioxide into carbon monoxide can be suitably prevented or restricted and the regeneration of the reducing agent 4R by the reducing gas can be further promoted.

In other words, it is preferable to provide the gas production device 1 with a reducing agent temperature control unit that adjusts the temperature of the reducing agent 4R according to the type of the reducing agent 4R (exothermic reaction or endothermic reaction).

In the present embodiment, four reactors 4a to 4d are used. Therefore, in at least one of the four reactors 4a to 4d, the temperature of the reducing agent 4R may be set to a different temperature according to the types of exhaust gas and reducing gas, the performance of the reducing agent 4R, and the like.

As a result, the conversion efficiency of carbon dioxide into carbon monoxide can be further improved, and the regeneration (reduction) of the reducing agent 4R by the reducing gas including the reducing substance can be performed more efficiently.

A temperature control mechanism for adjusting the temperature of the reducing agent 4R may be provided for each of the reactors 4a to 4d.

Branch gas lines GL4a to GL4d are connected to the outlet ports of the reactors 4a to 4d, respectively, and merge in the second gas switching unit 8b to form the gas line GL4. Further, respective valves (not shown) are provided in the middle of the branch gas lines GL4a to GL4d, as necessary.

For example, by adjusting the opening degree of the valves, the passage speed of the exhaust gas and the reducing gas passing through the reactors 4a to 4d (that is, the processing speed of the exhaust gas with the reducing agent 4R and the processing speed of the reducing agent 4R with the reducing gas) can be set.

In the present embodiment, the reaction unit 4 is configured of the reactors 4a to 4d, the first gas switching unit 8a and the second gas switching unit 8b.

With such a configuration, the gases (in the present embodiment, mainly carbon monoxide and water vapor) that have passed through the reactors 4a to 4d are mixed by merging in the second gas switching unit 8b, a mixed gas (merged gas) is generated, and then the mixed gas passes through one gas line GL4.

Therefore, where the flow path switching state (opening/closing state of the valves) of the first gas switching unit 8a is changed and different reactions are performed in any reactor of the reactors 4a to 4d, the mixed gas can be continuously produced, and ultimately, the produced gas can also be continuously produced. In addition, since the oxidation reaction and the reduction reaction are repeatedly performed at predetermined timings in the reactors 4a to 4d, the concentration of carbon monoxide contained in the mixed gas is stabilized. As a result, the concentration of carbon monoxide contained in the produced gas can also be stabilized.

Therefore, the gas production device 1 (gas production system 100) described above can continuously and stably produce carbon monoxide from carbon dioxide, which is industrially advantageous.

By contrast, when switching the gases to be supplied in the case where the gases that have passed through each of the reactors 4a to 4d are not merged, it is necessary to shut off the first gas switching unit 8a (temporarily close the valves) and each of the reactors 4a to 4d must be of batch type. Therefore, it takes a long time to produce carbon monoxide, and the conversion efficiency is low, which is industrially disadvantageous.

Also, the components of the gas discharged from each of the reactors 4a to 4d differ each time the supplied gas is switched. Therefore, the post-processing step for the gas discharged from each of the reactors 4a to 4d is complicated.

Here, it is usually preferable to adjust the concentration of carbon monoxide contained in the mixed gas within a specific range (predetermined % by volume with respect to the entire mixed gas). Where this concentration is too low, it tends to be difficult to obtain a produced gas containing carbon monoxide in a high concentration, depending on the performance of a gas purification unit 9, which will be described hereinbelow. Meanwhile, even if the upper limit of this concentration is exceeded, the effect of further increasing the concentration of carbon monoxide contained in the finally obtained produced gas cannot be expected to increase any further.

A produced gas discharge unit 40 that discharges the produced gas to the outside of the gas production device 1 is connected to the end of the gas line GL4 on the side opposite that of the reactors 4a to 4d.

In addition, the gas purification unit 9 is provided in the middle of the gas line GL4.

The gas purification unit 9 purifies carbon monoxide from the mixed gas and recovers the produced gas containing carbon monoxide in a high concentration. Where the carbon monoxide concentration in the mixed gas is sufficiently high, the gas purification unit 9 may be omitted.

The gas purification unit 9 can be configured of, for example, at least one processing unit selected from a cooler, a gas-liquid separator, a gas separator, a separation membrane, and a scrubber (absorption tower).

When using a plurality of processing units, the arrangement order thereof is arbitrary, but when using a cooler, a gas-liquid separator, and a gas separator in combination, it is preferable to arrange them in this order. In this case, the efficiency of purifying carbon monoxide from the mixed gas can be further enhanced.

The cooler cools the mixed gas. This generates condensed water (liquid).

Such a cooler can be configured to include a jacket-type cooling device in which a jacket for allowing a coolant to pass is arranged around piping, a multi-tubular cooling device which has a configuration (see Fig. 2) similar to that of the reactors 4a to 4d and allows a mixed gas to pass inside a pipe and a coolant to pass around the pipe, an air fin cooler, and the like.

The gas-liquid separator separates condensed water generated when the mixed gas is cooled in the cooler from the exhaust gas. An advantage at this time is that unnecessary gas components (in particular, carbon dioxide) remaining in the mixed gas can be dissolved and removed in the condensed water.

The gas-liquid separator can be configured in the same manner as the gas-liquid separator of the minor component removal unit 7, and preferably can be configured of a simple container. In this case, a filter may be arranged at the gas-liquid interface in the container to allow passage of gas but inhibit passage of liquid.

Also, in this case, a liquid line may be connected to the bottom of the container and a valve may be provided in the middle of the liquid line. With such a configuration, the condensed water stored in the container can be discharged (released) to the outside of the gas production device 1 through the liquid line by opening the valve.

Furthermore, it is preferable to provide a drain trap downstream of the valve in the middle of the liquid line. As a result, even if the valve malfunctions and carbon monoxide or hydrogen flows out into the liquid line, this gas can be stored in the drain trap and prevented from being discharged to the outside of the gas production device 1. A malfunction detection function of the valve and a redundancy measure when the valve malfunctions may be implemented in place of this drain trap, or together with the drain trap.

The liquid line may be connected to the tank 30 described above to reuse the discharged condensed water.

The gas separator can be configured, for example, by using one or two or more separators of a low-temperature separation system (cryogenic system), separators of a pressure swing adsorption (PSA) system, separators of a membrane separation system, separators of a temperature swing adsorption (TSA) system, separators using a porous coordination polymer (PCP) in which a metal ion (for example, copper ion) and an organic ligand (for example, 5-azidoisophthalic acid) are combined, separators using amine absorption, and the like.

Also, a valve may be provided between the gas-liquid separator and the gas separator of the gas line GL4. In this case, the processing speed of mixed gas (production speed of produced gas) can be adjusted by adjusting the opening of the valve.

In the present embodiment, the concentration of carbon monoxide contained in the mixed gas discharged from the gas-liquid separator is 75% by volume to 90% by volume with respect to the entire mixed gas.

Therefore, in the fields where produced gas containing carbon monoxide in a relatively low concentration (75% by volume to 90% by volume) can be used, the mixed gas can be directly supplied as it is to the next step without purifying the carbon monoxide from the mixed gas. That is, the gas separator can be omitted.

Such fields include, for example, the field of synthesizing valuable substances (for example, ethanol and the like) from the produced gas by fermentation with microorganisms (for example, Clostridium and the like), the field of manufacturing ferrous metals using the produced gas as a fuel or reducing agent, the field of producing electric devices, the field of synthesizing chemical products (phosgene, acetic acid, and the like) using carbon monoxide as a synthetic raw material, and the like.

Meanwhile in the fields where it is necessary to utilize a produced gas containing carbon monoxide in a relatively high concentration (greater than 90% by volume), the carbon monoxide is purified from the mixed gas to obtain the produced gas containing carbon monoxide in a high concentration.

Such fields include, for example, the field of using produced gas as a reducing agent (blast furnace), the field of thermal power generation by using produced gas as a fuel, the field of manufacturing chemicals by using produced gas as a raw material, the field of fuel cells using produced gas as a raw material, and the like.

In addition, the reaction unit 4 of the present embodiment has four gas lines GL5a to GL5d connecting between the first gas switching unit 8a and the second gas switching unit 8b.

With such a configuration, by switching the gas lines (flow paths) in the first gas switching unit 8a and the second gas switching unit 8b, for example, the exhaust gas (oxidizing gas) can be supplied and passed through one reactor of the reactors 4a to 4d, while the reducing gas can be supplied and passed through the remaining three reactors of the reactors 4a to 4d in succession in this order.

In the present embodiment, among the plurality of reactors 4a to 4d, the one reactor to which the exhaust gas is supplied is the first reactor, and the three reactors to which the reducing gas is supplied in succession when the exhaust gas is supplied to the first reactor are the second reactors.

Specifically, in the first turn shown in Fig. 3(I), the exhaust gas (carbon dioxide) can be supplied to the reactor (first reactor) 4a through the gas line GL3a, and the exhaust gas (carbon monoxide) that has passed through the reactor can be discharged through gas line GL4a.

Meanwhile, in the remaining reactors 4b to 4d, first, a reducing gas (hydrogen) is supplied to the reactor (second reactor that is first in order) 4b through the gas line GL3b, then the reducing gas (residual hydrogen) that has passed through this reactor is supplied to the reactor (second reactor that is second in order) 4c through the gas line GL4b, the gas line GL5c, and the gas line GL3c, then the reducing gas (residual hydrogen) that has passed through this reactor is supplied to the reactor (second reactor that is third in order) 4d through the gas line GL4c, the gas line GL5d, and the gas line GL3d, and the reducing gas (water) that has passed through this reactor can be discharged through the gas line GL4d.

Next, in the second turn shown in Fig. 3(II), the exhaust gas is supplied and passed through the reactor (first reactor) 4b, while the reducing gas can be supplied and passed through the reactors (second reactors) 4c, 4d, and 4a in succession in this order.

Next, in the third turn shown in Fig. 3(III), the exhaust gas is supplied and passed through the reactor (first reactor) 4c, while the reducing gas can be supplied and passed through the reactors (second reactors) 4d, 4a, and 4b in succession in this order.

Next, in the fourth turn shown in Fig. 3(IV), the exhaust gas is supplied and passed through the reactor (first reactor) 4d, while the reducing gas can be supplied and passed through the reactors (second reactors) 4a, 4b, and 4c in succession in this order.

In the present embodiment, a series of operations from the first turn to the fourth turn is regarded as one cycle, and by repeating a plurality of cycles, carbon dioxide can be continuously and stably converted into carbon monoxide.

For example, when using a reducing agent 4R having a lower reduction efficiency of the oxidized state by hydrogen (reducing substance) than the conversion efficiency of carbon dioxide into carbon monoxide, where the reducing gas is passed through one reactor only once, the hydrogen (residual hydrogen) that has not been used for the reduction of the reducing agent 4R in the oxidized state is wasted. By contrast, in the present embodiment, the reducing gas can be passed through three reactors in succession, in other words, the reducing gas can be passed through one reactor three times. Therefore, hydrogen (reducing gas) can be prevented from being wasted.

Further, by using three or more reactors, it is possible to provide a reactor through which the exhaust gas and the reducing gas do not pass. Therefore, other operations can be performed on the reactor not used for normal operation while continuing normal operation for producing the produced gas (carbon monoxide).

For example, when converting from carbon dioxide into carbon monoxide (carbon valuable substance), carbon may deposit on the surface of the reducing agent 4R and the conversion efficiency may decrease. At this time, where an operation of supplying oxygen to a reactor that is not used for normal operation is performed as shown in Fig. 4, the carbon deposited on the surface of the reducing agent 4R can be removed by combustion to regenerate the reducing agent 4R.

In this case, before and after supplying oxygen to the reactor, the interior of the reactor may be purged with an inactive gas (for example, nitrogen gas). As a result, it is possible to prevent the reducing gas and oxygen from unintentionally coming into contact with each other and reacting explosively.

In addition, as shown in Fig. 5, it is also possible to replace the reducing agent 4R or overhaul the reactor that is not used for normal operation after lowering the temperature of the reactor.

Furthermore, by using three or more reactors, the number of redox cycles per unit time can be decreased compared to the conventional configuration using two reactors, thereby prolonging the life of the reducing agent 4R per each reactor. In other words, the life of the reducing agent 4R can be controlled by adjusting the number of reactors.

Furthermore, when the reactor is configured of a heat exchange type reactor, reaction heat can be obtained by heat exchange between the heating gas (heating medium), the process gas (exhaust gas or reducing gas), and the reducing agent 4R. However, the conventional configuration using two reactors has a problem that it is difficult to adjust the reaction temperature because the exhaust gas and the reducing gas need to be alternately replaced.

By contrast, by using three or more reactors, it is possible to provide a reactor that is not used for normal operation. Therefore, by controlling the temperature of the heating gas in this reactor, it is easy to adjust adequately the optimum temperature for the conversion reaction of carbon dioxide into carbon monoxide or the optimum temperature for the reduction reaction of the reducing agent 4R in the oxidized state prior to the supply of the exhaust gas or reducing gas. The reactor that is not used for normal operation may be in a state in which inactive gas is allowed to pass, a state in which the passage of gas is stopped (blocked), or a state in which the exhaust gas or reducing gas is passed.

In addition, in the present embodiment, a water removal unit that removes water from the reducing gas that has passed through the second reactor may be installed between the adjacent second reactors (in the middle of the gas lines GL5a to GL5d). The content of water (water vapor) in the reducing gas that passes through the second reactor of the preceding stage and is supplied to the second reactor of the subsequent stage can thus be reduced. As a result, it is possible to prevent or restrict a decrease in the reduction efficiency of the reducing agent 4R in the oxidized state.

The water removal unit can be configured of, for example, one of a heat exchanger, a packed tower filled with an absorbent or an adsorbent, a membrane separation module, and the like, or a combination of two or more thereof. With the heat exchanger, water can be condensed and physically separated by a temperature difference. With the packed column, water can be separated chemically or physically by absorption or adsorption. In this case, if necessary, the absorbent or adsorbent may be regenerated and used. Furthermore, with the membrane separation module, water can be membrane-separated by a pressure difference.

Depending on the degree of difference between the conversion efficiency of carbon dioxide into carbon monoxide and the conversion efficiency of hydrogen into water, the number of second reactors may be 2, 4 or more (preferably 4 to 8) .

Meanwhile, for example, when using the reducing agent 4R having a higher reduction efficiency of the oxidized state by hydrogen than the conversion efficiency of carbon dioxide into carbon monoxide, the number of the second reactors through which the reducing gas is passed may be set to 1, and the number of the first reactors through which the exhaust gas (oxidizing gas) is passed in succession may be two or more (preferably 2 to 8).

Also, the number of the first reactors and the number of the second reactors may each be 2 or more (preferably 2 to 8).

When the number of the first reactors and/or the second reactors is two or more, where the number of installed reactors is set adequately, the pressure of the process gas supplied to the reactor (feed pressure) can be prevented from increasing unnecessarily.

When the number of the first reactors is two or more, a carbon monoxide removal unit that removes carbon monoxide from the exhaust gas (oxidizing gas) that has passed through the first reactors may be installed between the adjacent first reactors (in the middle of the gas lines GL5a to GL5d). As a result, the content of carbon monoxide in the exhaust gas that passes through the first reactor of the preceding stage and is supplied to the first reactor of the subsequent stage can be decreased. As a result, the content of carbon monoxide, which is a conversion product of carbon dioxide, is decreased, which makes it possible to prevent the conversion efficiency of carbon dioxide into carbon monoxide from decreasing in the first reactor of the subsequent stage.

The carbon monoxide removal unit can be configured of, for example, one of a packed tower filled with an absorbent or an adsorbent, a membrane separation module, a molecular sieve membrane, and the like, or a combination of two or more thereof. With the packed column, carbon monoxide can be chemically or physically separated by absorption or adsorption. In this case, if necessary, the absorbent or adsorbent may be regenerated and used. With the membrane separation module, carbon monoxide can be membrane-separated by a pressure difference. Further, with the molecular sieve membrane, carbon monoxide and carbon dioxide can be separated according to the molecular size (for example, molecular radius) thereof.

Next, a method for using (operating) the gas production system 100 will be described.
[1] First, by switching the gas line (flow path) in the first gas switching unit 8a, the connection unit 2 and the reactor 4a are communicated with each other, and the reducing gas supply unit 3 and the reactor 4b are communicated with each other. Also, the reactor 4b is communicated with the reactor 4c and the reactor 4d in this order.
[2] Next, in this state, the supply of exhaust gas from the furnace 20 through the connection unit 2 is started.

The exhaust gas supplied from the furnace 20 is normally at a high temperature of 50°C to 300°C, but is cooled to 30°C to 50°C before reaching the concentration adjustment unit 5.

[3] Next, the exhaust gas passes through the oxygen removal device (concentration adjustment unit 5). Oxygen is thereby removed from the exhaust gas, and the concentration of carbon dioxide contained in the exhaust gas increases.

[4] Next, the exhaust gas passes through the compression unit 6. This increases the pressure of the exhaust gas.

[5] Next, the exhaust gas passes through the minor component removal unit 7. As a result, the condensed water generated when the exhaust gas is compressed in the compression unit 6 and the inactivating components that reduce the activity of the reducing agent 4R are removed from the exhaust gas.

[6] Next, the exhaust gas passes through the exhaust gas heating unit 10. This heats the exhaust gas.

[7] Next, the exhaust gas is supplied to the reactor (first reactor) 4a. In the reactor 4a, carbon dioxide in the exhaust gas is reduced to carbon monoxide by the reducing agent 4R. At this time, the reducing agent 4R is oxidized.

The heating temperature of the exhaust gas in step [6] is preferably 300°C to 1000°C, more preferably 450°C to 950°C, even more preferably 650°C to 900°C, and particularly preferably 700°C to 850°C. Where the heating temperature of the exhaust gas is set within the above range, for example, it is possible to prevent or restrict a rapid temperature drop of the reducing agent 4R due to an endothermic reaction during conversion of carbon dioxide into carbon monoxide. Therefore, the reduction reaction of carbon dioxide in the reactor 4a can be advanced more smoothly.

[8] In parallel with above steps [2] to [7], water (reducing gas raw material) is supplied from the tank 30 to the hydrogen generator (reducing gas supply unit 3) to generate hydrogen from water.

[9] Next, the reducing gas including hydrogen passes through the reducing gas heating unit 11. As a result, the reducing gas is heated.

[10] Next, the reducing gas is supplied to the reactor (second reactor that is first in order) 4b. In the reactor 4b, the oxidized reducing agent 4R is reduced (regenerated) by the reducing gas (hydrogen).

The heating temperature of the reducing gas in step [9] is preferably 300°C to 1000°C, more preferably 450°C to 950°C, even more preferably 650°C to 900°C, and particularly preferably 700°C to 850°C. Where the heating temperature of the reducing gas is set within the above range, for example, it is possible to prevent or restrict a rapid temperature drop of the reducing agent 4R due to an endothermic reaction during reduction (regeneration) of the reducing agent 4R in the oxidized state. Therefore, the reduction reaction of the reducing agent 4R in the reactor 4b can be advanced more smoothly.

[11] Next, the reducing gas (residual hydrogen) that has passed through the reactor 4b is supplied to the reactor (second reactor that is second in order) 4c. In the reactor 4c, the reducing agent 4R in the oxidized state is reduced (regenerated) by the reducing gas (residual hydrogen).

Similarly, the reducing gas (residual hydrogen) that has passed through the reactor 4c is supplied to the reactor (second reactor that is third in order) 4d. In the reactor 4d, the reducing agent 4R in the oxidized state is reduced (regenerated) by the reducing gas (residual hydrogen).

The reducing gas that has passed through the reactor 4b and the reducing gas that has passed through the reactor 4c may each be heated to the above temperature, if necessary.

In the present embodiment, the switching timing of the gas lines in the first gas switching unit 8a (that is, the switching timing of the exhaust gas and the reducing gas supplied to the reactors 4a to 4d) is preferably when a predetermined amount of exhaust gas has been supplied to any one reactor of the reactors 4a to 4d (condition I), or when the conversion efficiency of carbon dioxide into carbon monoxide has fallen below a predetermined value (condition II). As a result, the reactors 4a to 4d are switched before the conversion efficiency of carbon dioxide into carbon monoxide drops significantly, so the concentration of carbon monoxide contained in the mixed gas can be increased and stabilized.

For the detection of condition II, respective gas concentration sensors may be arranged near the inlet and outlet ports of the reactors 4a to 4d. Based on the detected values of these gas concentration sensors, the conversion efficiency of carbon dioxide into carbon monoxide can be obtained by calculation.

In addition, from the viewpoint of further stabilizing the concentration of carbon monoxide contained in the mixed gas, the amount of exhaust gas supplied to the reactor (first reactor) to which the exhaust gas is supplied among the reactors 4a to 4d and the amount of reducing gas supplied to three reactors (second reactors) to which the reducing gas is supplied among the reactors 4a to 4d are preferably set to be as close as possible. Specifically, where the supply amount of the exhaust gas to the first reactor is P [mL/min] and the supply amount of the reducing gas to the second reactor is Q [mL/min], it is preferable that P/Q satisfy the relationship of 0.7 to 1.1, more preferably the relationship of 0.85 to 1.05. Where the supply amount P of the exhaust gas is too large, the amount of carbon dioxide discharged from the reactors 4a to 4d without being converted into carbon monoxide tends to increase, depending on the amount of the reducing agent 4R in the reactors 4a to 4d.

The predetermined amount in condition I above is preferably an amount of carbon dioxide of 0.01 mol to 3 mol, more preferably an amount of 0.1 mol to 2.5 mol, per 1 mol of the metal element with the largest mass ratio in the reducing agent 4R.

In addition, the predetermined value in condition II above is preferably 50% to 100%, more preferably 60% to 100%, and even more preferably 70% to 100%. The upper limit of the predetermined value may be 95% or less, or 90% or less.

In either case, the reactors 4a to 4d can be switched before an extreme decrease in the conversion efficiency of carbon dioxide into carbon monoxide, and as a result, the mixed gas containing carbon monoxide in a high concentration can be stably obtained, so that a produced gas containing carbon monoxide in a high concentration can be produced.

The supply amount Q of the reducing gas (reducing substance) is preferably an amount of hydrogen of 0.1 mol to 3 mol, more preferably an amount of 0.15 mol to 2.5 mol per 1 mol of the metal element with the largest mass ratio in the reducing agent 4R. Even if the supply amount Q of the reducing gas is increased beyond the upper limit, no further increase in the effect of reducing the reducing agent 4R in the oxidized state can be expected. Meanwhile, where the supply amount Q of the reducing gas is too small, the reduction of the reducing agent 4R may be insufficient depending on the amount of hydrogen contained in the reducing gas.

Also, the pressure of the reducing gas supplied to the reactors 4a to 4d may be atmospheric pressure or the gas may be pressurized (to the same degree as the exhaust gas).

[12] Next, the gases that have passed through the reactors 4a to 4d merge to generate a mixed gas. At this point in time, the temperature of the mixed gas is typically 600°C to 650°C. Where the temperature of the mixed gas at this point in time is within the above range, it means that the temperature in the reactors 4a to 4d is maintained at a sufficiently high temperature, and it can be determined that the conversion of carbon dioxide into carbon monoxide by the reducing agent 4R or the reduction of the reducing agent 4R by the reducing gas is advancing efficiently.

[13] Next, the mixed gas is cooled to 100°C to 300°C before reaching the gas purification unit 9.

[14] Next, the mixed gas passes through the gas purification unit 9. For example, the generated condensed water and carbon dioxide dissolved in the condensed water are thereby removed. As a result, carbon monoxide is purified from the mixed gas to obtain a produced gas containing carbon monoxide in a high concentration.

The temperature of the produced gas obtained is 20°C to 50°C.

In addition, since the temperature of the final produced gas discharged to the outside of the gas production device 1 is usually determined according to the required temperature of the process in a subsequent stage, a cooler or a heater may be arranged, as necessary, on the downstream side of the gas purification unit 9.

[15] Next, the produced gas is discharged from the produced gas discharge unit 40 to the outside of the gas production device 1 and supplied to the next step.

In the present embodiment, an example is explained in which the reactor 4a, the reactor 4b, the reactor 4c, and the reactor 4d are switched in this order to be used as the first reactor, but the order of use as the first reactor is arbitrary.

For example, the reactors 4a to 4d can be switched and used as follows.

First, in the first turn, the exhaust gas is passed through the reactor 4a as the first reactor, and the reducing gas is passed through the reactor 4b, the reactor 4c, and the reactor 4d as the second reactors in this order.

Next, in the second turn, the exhaust gas is passed through the reactor 4d as the first reactor, and the reducing gas is passed through the reactor 4a, the reactor 4b, and the reactor 4c as the second reactors in this order.

Next, in the third turn, the exhaust gas is passed through the reactor 4c as the first reactor, and the reducing gas is passed through the reactor 4d, the reactor 4a, and the reactor 4b as the second reactors in this order.

Next, in the fourth turn, the exhaust gas is passed through the reactor 4b as the first reactor, and the reducing gas is passed through the reactor 4c, the reactor 4d, and the reactor 4a as the second reactors in this order.

Using the gas production device 1 and the gas production system 100 as described above, it is possible to produce a produced gas including carbon monoxide from an exhaust gas discharged from a furnace and containing carbon dioxide.

### <Gas Production Method>

The gas production method of the present embodiment comprises I: preparing a plurality of reactors in which a reducing agent including a metal oxide that produces carbon monoxide (carbon valuable substance) by reduction of carbon dioxide is contained, an exhaust gas (oxidizing gas) including carbon dioxide, and a reducing gas including hydrogen (reducing substance) that reduces the reducing agent that has been brought into an oxidized state by contact with the carbon dioxide, and II: supplying, while switching, the oxidizing gas and the reducing gas to each of the reactors 4a to 4d to convert the carbon dioxide into carbon monoxide, and then reducing the oxidized reducing agent 4R, wherein where the reactor to which the oxidizing gas is supplied, from among the reactors 4a to 4d, is defined as a first reactor and the reactor to which the reducing gas is supplied, from among the reactors 4a to 4d, is defined as a second reactor, the number of the first reactors is two or more and/or the number of the second reactors is two or more.

Carbon monoxide (carbon valuable) can be generated continuously, stably, and efficiently by setting the number of the first reactors and second reactors according to the degree of difference between the conversion efficiency of carbon dioxide into carbon monoxide of the reducing agent 4R and the reduction efficiency of the reducing agent 4R in the oxidized state by hydrogen, the degree of the need for maintenance of the reactors, the degree of difference between the optimum temperature for the conversion reaction of carbon dioxide into carbon monoxide and the optimum temperature for the reduction reaction of the reducing agent 4R in the oxidized state, and the like.

### <Product>

The produced gas produced using the gas production device 1 and the gas production system 100 usually has a carbon monoxide concentration of 60% by volume or more, preferably 75% by volume or more, and more preferably 90% by volume or more.

In addition, the produced gas as described above can be used in the field of synthesizing valuable substances (for example, ethanol and the like) by fermentation with microorganisms (for example, Clostridium and the like), in the field of manufacturing ferrous metals using the produced gas as a fuel or reducing agent, in the field of producing electric devices, in the field of producing chemical products (phosgene, acetic acid, and the like) using carbon monoxide as a synthetic raw material, in the field of using carbon monoxide as a reducing agent (blast furnace), in the field of thermal power generation by using carbon monoxide as a fuel, in the field of fuel cells using carbon monoxide as a fuel, and the like.

### <Second Embodiment>

Next, a second embodiment of the gas production system will be described.

Fig. 6 is a schematic diagram showing the configuration of the reaction unit of the second embodiment, and Fig. 7 is a schematic diagram showing a method of switching the gases to be passed through the reactors in the second embodiment.

The gas production system of the second embodiment will be explained below, but the explanation will be focused on differences from the gas production system of the first embodiment, and the explanation of the same items will be omitted.

The gas production system of the second embodiment is the same as the gas production system of the first embodiment in all respects, except for the configuration of the reaction unit.

In the reaction unit 4 shown in Fig. 6, the second gas switching unit 8b and the gas lines GL5a to GL5d are omitted.

The branch gas lines GL4a to GL4d merge to form one gas line GL4.

With this configuration, by switching the gas lines (flow paths) in the first gas switching unit 8a, for example, the exhaust gas (oxidizing gas) can be supplied and passed through one of the reactors 4a to 4d, while the reducing gas can be supplied and passed through the remaining three reactors of the reactors 4a to 4d in parallel.

In the present embodiment, one reactor to which the exhaust gas is supplied, from among the plurality of reactors 4a to 4d, is the first reactor, and when the exhaust gas is supplied to the first reactor, the three reactors to which the reducing gas is supplied in parallel are the second reactors.

Specifically, in the first turn shown in Fig. 7(I), the exhaust gas (carbon dioxide) can be supplied to the reactor (first reactor) 4a through the gas line GL3a, and the exhaust gas (carbon monoxide) that has passed through the reactor can be discharged through gas line GL4a.

Meanwhile, the reducing gas (hydrogen) can be supplied to the reactors 4b to 4d in parallel from the gas lines GL3b to CL3d, respectively, and the reducing gas (water) that has passed through the reactors can be discharged through the gas lines GL4b to GL4d.

Next, in the second turn shown in Fig. 7(II), the exhaust gas can be supplied and passed through the reactor (first reactor) 4b, while the reducing gas can be supplied and passed through the reactors (second reactors) 4a, 4c, and 4d in parallel.

Next, in the third turn shown in Fig. 7(III), the exhaust gas can be supplied and passed through the reactor (first reactor) 4c, while the reducing gas can be supplied and passed through the reactors (second reactors) 4a, 4b, and 4d in parallel.

Next, in the fourth turn shown in Fig. 7(IV), the exhaust gas can be supplied and passed through the reactor (first reactor) 4d, while the reducing gas can be supplied and passed through the reactors (second reactors) 4a, 4b, and 4c in parallel.

In the present embodiment, a series of operations from the first turn to the fourth turn is regarded as one cycle, and by repeating a plurality of cycles, carbon dioxide can be continuously and stably converted into carbon monoxide.

For example, when using a reducing agent 4R having a lower reduction efficiency of the oxidized state by hydrogen (reducing substance) than the conversion efficiency of carbon dioxide into carbon monoxide, where the reducing gas is passed through one reactor only once, the reducing agent 4R in the oxidized state may not be sufficiently reduced. By contrast, in the present embodiment, the reducing gas can be passed through three reactors in parallel. In other words, under steady operating conditions, the reducing gas in the same amount as the exhaust gas can be passed through one reactor over a three times longer time. Therefore, the reducing agent 4R in the oxidized state can be sufficiently reduced by hydrogen (reducing gas).

Further, by using three or more reactors, it is possible to provide a reactor through which the exhaust gas and the reducing gas do not pass. Therefore, other operations can be performed on the reactor not used for normal operation while continuing normal operation for producing the produced gas (carbon monoxide).

For example, when converting from carbon dioxide into carbon monoxide (carbon valuable substance), carbon may deposit on the surface of the reducing agent 4R and the conversion efficiency may decrease. At this time, where an operation of supplying oxygen to a reactor that is not used for normal operation is performed, the carbon deposited on the surface of the reducing agent 4R can be removed by combustion to regenerate the reducing agent 4R.

In this case, before and after supplying oxygen to the reactor, the interior of the reactor may be purged with an inactive gas (for example, nitrogen gas). As a result, it is possible to prevent the reducing gas and oxygen from unintentionally coming into contact with each other and reacting explosively.

In addition, it is also possible to replace the reducing agent 4R or overhaul the reactor that is not used for normal operation after lowering the temperature of the reactor.

Furthermore, the use of three or more reactors can reduce the number of redox cycles per unit time compared to the conventional configuration using two reactors, thereby prolonging the life of the reducing agent 4R per each reactor. In other words, the life of the reducing agent 4R can be controlled to some extent by adjusting the number of reactors.

Furthermore, when the reactor is configured of a heat exchange type reactor, reaction heat can be obtained by heat exchange between the heating gas (heating medium), the process gas (exhaust gas or reducing gas), and the reducing agent 4R. However, the conventional configuration using two reactors has a problem that it is difficult to adjust the reaction temperature because the exhaust gas and the reducing gas need to be alternately replaced.

By contrast, by using three or more reactors, it is possible to provide a reactor that is not used for normal operation. Therefore, by controlling the temperature of the heating gas in this reactor, it is easy to adjust adequately the optimum temperature for the conversion reaction of carbon dioxide into carbon monoxide or the optimum temperature for the reduction reaction of the reducing agent 4R in the oxidized state prior to the supply of the exhaust gas or reducing gas. The reactor that is not used for normal operation may be in a state in which inactive gas is allowed to pass, a state in which the passage of gas is stopped (blocked), or a state in which the exhaust gas or reducing gas is passed.

Depending on the degree of difference between the conversion efficiency of carbon dioxide into carbon monoxide and the conversion efficiency of hydrogen into water, the number of second reactors may be 2, 4 or more (preferably 4 to 8) .

Meanwhile, when using the reducing agent 4R, which has a higher conversion efficiency of hydrogen into water than the conversion efficiency of carbon dioxide into carbon monoxide, the number of the second reactors through which the reducing gas is passed may be set to 1, and the number of the first reactors through which the exhaust gas (oxidizing gas) is passed in parallel may be two or more (preferably 2 to 8).

Also, the number of the first reactors and the number of the second reactors may each be 2 or more (preferably 2 to 8).

In the case of the present embodiment as well, it is preferable to set the ratio of the supply amount P of the exhaust gas to the first reactor to the supply amount Q of the reducing gas to the second reactor within the above range.

Therefore, the supply amount of the reducing gas, which is supplied in parallel, to one of the second reactors is adjusted to about Q/3.

### <Third Embodiment>

Next, a third embodiment of the gas production system will be described.

Fig. 8 is a schematic diagram showing the configuration of the reaction unit of the third embodiment, Fig. 9 is a schematic diagram illustrating a method of switching the gases to be passed through the reactors in the third embodiment, and Fig. 10 is a schematic diagram showing another method of switching the gases to be passed through the reactors in the third embodiment.

The gas production system of the third embodiment will be explained below, but the explanation will be focused on differences from the gas production systems of the first and second embodiments, and the explanation of the same items will be omitted.

The gas production system of the third embodiment is the same as the gas production system of the first embodiment in all respects, except for the configuration of the reaction unit.

The reaction unit 4 shown in Fig. 8 has a configuration in which two reactors connected in series constitute a set, and two sets are connected in parallel.

Specifically, the upper reactors 4a are connected to the first gas switching unit 8a through the gas lines GL3a and are connected to the third gas switching unit 8c through the gas lines GL4a. The lower reactors 4b are connected to the third gas switching unit 8c through the gas lines GL3b and are connected to the second gas switching unit 8b through the gas lines GL4b.

A gas line GL6a is connected between the first gas switching unit 8a and the third gas switching unit 8c, a gas line GL6b is connected between the third gas switching unit 8c and the second gas switching unit 8b, and a gas line GL5a is connected between the first gas switching unit 8a and the second gas switching unit 8b.

In this configuration, a reducing agent (first reducing agent) 4Ra is contained in the reactors 4a, and a reducing agent (second reducing agent) 4Rb different from the reducing agent 4Ra is contained in the reactors 4b.

With such a configuration, by switching the gas lines (flow paths) in the first gas switching unit 8a, the second gas switching unit 8b, and the third gas switching unit 8c, for example, the exhaust gas (oxidizing gas) can be supplied and passed through the reactors 4a and 4b on the left side, while the reducing gas can be supplied and passed through the reactors 4a and 4b on the right side.

In the present embodiment, among the plurality of reactors 4a and 4b, the two reactors to which the exhaust gas is supplied in succession are the first reactors, and the two reactors to which the reducing gas is supplied in succession when the exhaust gas is supplied to the first reactors are the second reactors.

Specifically, as shown in Fig. 9 as one mode based on the basic diagram of Fig. 8, the exhaust gas (carbon dioxide) is supplied to the reactor (first reactor) 4a on the left side through the gas line GL3a, then the exhaust gas (carbon dioxide and carbon monoxide) that has passed through this reactor is supplied in succession to the reactor (first reactor) 4b on the left side through the gas line GL4a and the gas line GL3b, and then the exhaust gas (carbon monoxide) that has passed through this reactor can be discharged through the gas line GL4b.

Meanwhile, the reducing gas (hydrogen) is supplied to the reactor (second reactor) 4b on the right side through the gas lines GL6a and GL3b, then the reducing gas (hydrogen and water) that has passed through this reactor is supplied to the reactor (first reactor) 4a on the right side in succession through the gas line GL4b, the gas line GL5a, and the gas line GL3a, and then the reducing gas (water) that has passed through this reactor can be discharged through the gas line GL4a and the gas line GL6b.

As the reducing agent 4R, for example, a reducing agent 4Ra and a reducing agent 4Rb having a higher conversion efficiency of carbon dioxide into carbon monoxide (carbon valuable substance) and a lower conversion efficiency of hydrogen into water than the reducing agent 4Ra can be used in combination.

With such a configuration, the exhaust gas comes into contact with the reducing agent 4Ra having a low conversion efficiency of carbon dioxide into carbon monoxide, and then comes into contact with the reducing agent 4Rb having a high conversion efficiency of carbon dioxide into carbon monoxide. Meanwhile, the reducing gas comes into contact with the reducing agent 4Rb having a low reduction efficiency of the oxidized state by hydrogen (reducing substance), and then comes into contact with the reducing agent 4Ra having a high conversion efficiency of hydrogen into water.

Thus, by using a configuration in which both the exhaust gas and the reducing gas come into contact with the reducing agent having a low activity and then come into contact with the reducing agent having a high activity, the conversion efficiency of carbon dioxide into carbon monoxide and the conversion efficiency of hydrogen into water can be further increased.

In addition, as the reducing agent 4R, for example, a reducing agent 4Ra having a low activity but a long life and a reducing agent 4Rb having a high activity but a short life can be used in combination.

In the conventional configuration using two reactors, one of the reducing agents 4Ra and 4Rb needs to be selected and used.

By contrast, in the present embodiment, after a certain portion of carbon dioxide is converted into carbon monoxide in the reactor 4a of the preceding stage that is filled with the reducing agent 4Ra having a low activity, the remaining carbon dioxide can be converted into carbon monoxide in the reactor 4b of the subsequent stage that is filled with the reducing agent 4Rb having a high activity. Therefore, the frequency of contact of carbon dioxide with the active sites of each reducing agent (in particular, the reducing agent 4Rb having a short life) can be reduced, and the life of the reducing agent 4R as a whole can be extended.

In addition, as the reducing agent 4R, for example, a reducing agent 4Ra that has a high activity but tends to generate by-products and a reducing agent 4Rb that can convert the by-products into a carbon valuable substance can be used in combination.

In the conventional configuration using two reactors, the reducing agent 4Ra is usually used, but in this case, it is necessary to separate and remove the generated by-products by some means.

By contrast, in the present embodiment, even if the reducing agent 4Ra that tends to generate by-products is used in the reactor 4a of the preceding stage, by providing a reactor 4b filled with the reducing agent 4Rb capable of converting the by-products into aa carbon valuable substance in the subsequent stage, the selectivity and conversion rate in the reaction unit 4 as a whole can be improved.

Also, as the reducing agent 4R, for example, two types of reducing agents 4Ra and 4Rb having different optimum reaction temperatures can be used in combination.

In the conventional configuration using two reactors, such reducing agents 4Ra and 4Rb having different optimum reaction temperatures cannot be used in combination.

By contrast, in the present embodiment, reducing agents 4Ra and 4Rb having different optimum reaction temperatures can be used in combination.

As the reducing agent 4R, for example, a reducing agent 4Ra with a high activity but a high pressure loss and a reducing agent 4Rb with a low activity but a low pressure loss can be used in combination.

In the conventional configuration using two reactors, one of the reducing agents 4Ra and 4Rb needs to be selected and used.

By contrast, in the present embodiment, by using the reducing agent 4Ra and the reducing agent 4Rb in combination, the reaction unit 4 as a whole can be set to an arbitrary pressure loss and an arbitrary conversion efficiency.

Further, in the configuration shown in Fig. 9, the direction in which the exhaust gas is passed through the reactors 4a and 4b is the same as the direction in which the reducing gas is passed through the reactors 4a and 4b. With such a configuration, compared to the case where the two directions are opposite directions (counterflow), the switching operation of the valves is facilitated, and the supply amount of the exhaust gas or reducing gas that does not contribute to the reaction is minimized, thereby making it possible to increase the conversion efficiency of carbon dioxide into carbon monoxide or the regeneration efficiency of the reducing agent 4R (4Ra, 4Rb) in the oxidized state.

As shown in Fig. 10, the exhaust gas (carbon dioxide) is supplied to the reactor (first reactor) 4a on the left side through the gas line GL3a, then the exhaust gas (carbon dioxide and carbon monoxide) that has passed through this reactor is supplied to the reactor (first reactor) 4b on the left side in succession through the gas line GL4a and the gas line GL3b, and then the exhaust gas (carbon monoxide) that has passed through this reactor can be discharged through the gas line GL4b.

Meanwhile, the reducing gas (hydrogen) is supplied to the reactor (second reactor) 4b on the right side through the gas line GL6a, the gas line GL6b, and the gas line GL4b, then the reducing gas (hydrogen and water) that has passed through this reactor is supplied to the reactor (first reactor) 4a on the right side in succession through the gas line GL3b and the gas line GL4a, and then the reducing gas (water) that has passed through this reactor can be discharged through the gas line GL3a and the gas line GL5a.

With this configuration as well, the exhaust gas comes into contact with the reducing agent 4Ra having a low conversion efficiency of carbon dioxide into carbon monoxide, and then comes into contact with the reducing agent 4Rb having a high conversion efficiency of carbon dioxide into carbon monoxide. Meanwhile, the reducing gas comes into contact with the reducing agent 4Rb having a low reduction efficiency of the oxidized state by hydrogen (reducing substance), and then comes into contact with the reducing agent 4Ra having a high conversion efficiency of hydrogen into water.

In this way, both the exhaust gas and the reducing gas come into contact with the reducing agent having a low activity and then come into contact with the reducing agent having a high activity, whereby the conversion efficiency of carbon dioxide into carbon monoxide and the conversion efficiency of hydrogen into water can be further increased.

Further, in the configuration shown in Fig. 10, the direction in which the exhaust gas is passed through the reactors 4a and 4b is opposite to the direction in which the reducing gas is passed through the reactors 4a and 4b. With such a configuration, compared to the case where the two directions are the same (cocurrent flow), the conversion efficiency of carbon dioxide into carbon monoxide or the regeneration efficiency of the reducing agent 4R (4Ra, 4Rb) in the oxidized state is improved.

When the reducing agent 4Ra and the reducing agent 4Rb, which has a higher conversion efficiency of carbon dioxide into carbon monoxide and a lower reduction efficiency of the oxidized state by hydrogen than the reducing agent 4Ra, are used in combination as the reducing agent 4R, specific examples of the reducing agent 4Ra include metal oxides containing at least one of copper and iron, and specific examples of the reducing agent 4Rb include metal oxides containing cerium.

In the present embodiment, a reactor in which a third reducing agent different from the reducing agent (first reducing agent) 4Ra and the reducing agent (second reducing agent) 4Rb is contained may be arranged between the reactor 4b and the second gas switching unit 8b with the third gas switching unit being interposed therebetween. For example, a reducing agent having a higher conversion efficiency of carbon dioxide into carbon monoxide (carbon valuable substance) and a lower reduction efficiency of the oxidized state by hydrogen (reducing substance) than the reducing agent 4Rb can be selected as the third reducing agent.

That is, in the present embodiment, two or more different reducing agents can be contained in different reactors and used.

The gas production device and gas production method of the present invention have been described above, but the present invention is not limited to these.

For example, the above embodiments of the gas production device of the present invention may have any other additional configuration, or some configurations thereof may be replaced with any configurations that exhibit similar functions, or some configurations thereof may be omitted.

In addition, the above embodiments of the gas production method of the present invention may be added with a step to be performed for any purpose.

Further, any configurations of the first to third embodiments may be combined.

Further, in the above embodiments, a gas containing hydrogen was described as a representative of the reducing gas, but the reducing gas can also use a gas including at least one selected from a hydrocarbon (for example, methane, ethane, acetylene, and the like) and ammonia as a reducing substance instead of or in addition to hydrogen.

Further, in the above embodiments, a heat exchanger configured to exchange heat between the exhaust gas (oxidizing gas) or reducing gas before the gas is supplied to the reactor and the mixed gas was described, but a heat exchanger configured to exchange heat with the gases discharged from each reactor but not yet mixed may be also employed.

### Examples

The present invention will be described hereinbelow in more detail with reference to examples and comparative examples, but the present invention is not limited to these examples.

### (Example 1)

For the reaction unit shown in Fig. 1 that included four reactors filled with CeO₂ particles as the reducing agent 4R, production of carbon monoxide gas from carbon dioxide gas by using carbon dioxide gas (oxidizing gas) and hydrogen gas (reducing gas) in the method illustrated by Fig. 3 was simulated.

The ratio of the supply amount P of carbon dioxide gas to the reactor to the supply amount Q of hydrogen gas to the second reactor was set to 1.

### (Comparative Example 1)

For the reaction unit that included two reactors filled with CeO₂ particles as the reducing agent 4R, production of carbon monoxide gas from carbon dioxide gas by alternately switching and using the first reactor to which carbon dioxide gas is supplied (oxidizing gas) and the second reactor to which hydrogen gas (reducing gas) is supplied was simulated.

Carbon dioxide gas and hydrogen gas were repeatedly passed through one reactor four times each. In addition, the ratio of the supply amount P of carbon dioxide gas to the reactor to the supply amount Q of hydrogen gas to the second reactor was set to 1.

As a result of the simulation, the utilization rate of hydrogen gas was 30% in Example 1 and 20% in Comparative Example 1.

### (Example 2 and Comparative Example 2)

Production of carbon monoxide gas from carbon dioxide gas was simulated in the same manner as in Example 1 and Comparative Example 1, except that CuZnO₂ particles were used instead of CeO₂ particles.

As a result of the simulation, the utilization rate of hydrogen gas was 45% in Example 2 and 28% in Comparative Example 2.

### [Industrial Applicability]

According to the present invention, a carbon valuable substance can be generated continuously, stably and efficiently by using an oxidizing gas including carbon dioxide and a reducing gas including a reducing substance. Therefore, the present invention is industrially applicable.

## Claims

1. A gas production device comprising:
an oxidizing gas supply unit that supplies an oxidizing gas including carbon dioxide;
a reducing gas supply unit that supplies a reducing gas including a reducing substance that reduces a reducing agent that has been brought into an oxidized state by contact with the carbon dioxide, the reducing agent including a metal oxide that generates a carbon valuable substance by reducing the carbon dioxide; and
a reaction unit provided with a plurality of reactors connected respectively to the oxidizing gas supply unit and the reducing gas supply unit, and the reducing agent contained in each of the reactors, the reaction unit being capable of switching between the oxidizing gas and the reducing gas to be supplied to each of the reactors, wherein
the plurality of reactors include first reactors and second reactors to which the reducing gas is supplied when the oxidizing gas is supplied to the first reactors, and the number of the first reactors is two or more and/or the number of the second reactors is two or more.

2. The gas production device according to claim 1, wherein the gas production device is configured so that the number of the second reactors is two or more, and the reducing gas is passed through the two or more second reactors in succession.

3. The gas production device according to claim 1, wherein the gas production device is configured so that the number of the second reactors is two or more, and the reducing gas is passed through the two or more second reactors in parallel.

4. The gas production device according to any one of claims 1 to 3, wherein the gas production device is configured so that the number of the first reactors is two or more, and the oxidizing gas is passed through the two or more first reactors in succession.

5. The gas production device according to any one of claims 1 to 3, wherein the gas production device is configured so that the number of the first reactors is two or more, and the oxidizing gas is passed through the two or more first reactors in parallel.

6. The gas production device according to claim 1, wherein the gas production device is configured so that the number of the first reactors is two or more and the number of the second reactors is two or more, the oxidizing gas is passed through the two or more first reactors in succession, and the reducing gas is passed through the two or more second reactors in succession, and
a first reducing agent and a second reducing agent different from the first reducing agent are used as the reducing agent.

7. The gas production device according to claim 6, wherein
the oxidizing gas is passed through in succession in order from the first reactor in which the first reducing agent is contained to the first reactor in which the second reducing agent is contained, and
the reducing gas is passed through in succession in order from the second reactor in which the second reducing agent is contained to the second reactor in which the first reducing agent is contained.

8. The gas production device according to claim 6 or 7, wherein the direction in which the oxidizing gas is passed through the reactors and the direction in which the reducing gas is passed through the reactors are the same.

9. The gas production device according to claim 6 or 7, wherein the direction in which the oxidizing gas is passed through the reactors and the direction in which the reducing gas is passed through the reactors are opposite directions.

10. The gas production device according to any one of claims 4 to 9, further including, between the adjacent first reactors, a carbon monoxide removal unit that removes carbon monoxide from the oxidizing gas that has passed through the first reactor.

11. The gas production device according to any one of claims 2 to 10, further including, between the adjacent second reactors, a water removal unit that removes water from the reducing gas that has passed through the second reactor.

12. The gas production device according to any one of claims 1 to 11, wherein the temperature of the reducing agent is set to a different temperature in at least one of the plurality of reactors.

13. The gas production device according to any one of claims 1 to 12, wherein at least one of the plurality of reactors is different from others in volume.

14. The gas production device according to any one of claims 1 to 13, wherein in a case of defining the supply amount of the oxidizing gas to the first reactor as P [mL/min], and the supply amount of the reducing gas to the second reactor as Q [mL/min], a relationship in which P/Q is 0.7 to 1.1 is satisfied.

15. The gas production device according to any one of claims 1 to 14, wherein the reducing agent includes hydrogen.

16. The gas production device according to any one of claims 1 to 15, wherein the oxidizing gas is an exhaust gas discharged from a furnace.

17. A gas production method comprising:
preparing a plurality of reactors in which a reducing agent including a metal oxide that generates a carbon valuable substance by reduction of carbon dioxide is contained, an oxidizing gas including the carbon dioxide, and a reducing gas including a reducing substance that reduces the reducing agent that has been brought into an oxidized state by contact with the carbon dioxide, and
supplying the oxidizing gas and the reducing gas to each of the reactors by switching between the oxidizing gas and the reducing gas to convert the carbon dioxide into the carbon valuable substance, and then reducing the oxidized reducing agent, wherein
in a case of defining the reactor to which the oxidizing gas is supplied as first reactors, and the reactor to which the reducing gas is supplied as second reactors, the number of the first reactors is two or more and/or the number of the second reactors is two or more.

18. The gas production method according to claim 17, wherein the oxidizing gas is an exhaust gas discharged from a furnace.
